# EUROPÄISCHE PATENTSCHRIFT

(11) **EP 0 432 580 B1**
(45) Veröffentlichungstag und Bekanntmachung des Hinweises auf die Patenterteilung: **01.03.1995**
(21) Anmeldenummer: 90122797.5
(22) Anmeldetag: 29.11.1990
(51) Int. Cl.: C08G 64/20, C08G 64/16

(54) **Zweistufen-Verfahren zur Herstellung von Polycarbonaten auf Basis von speziellen Dihydroxydiphenylalkanen**
Two-stage process for the preparation of polycarbonates based on particular dihydroxydiphenylalcanes
Procédé en deux étapes pour la préparation de polycarbonates à partir de dihydroxydiphényl alcanes particuliers

(30) Priorität: 12.12.1989 DE 3941014
(43) Veröffentlichungstag der Anmeldung: 19.06.1991
(73) Patentinhaber: BAYER AG, 51368 Leverkusen (DE)
(72) Erfinder: Westeppe, Uwe, Dr., W-4020 Mettmann (DE); Freitag, Dieter, Dr., W-4150 Krefeld 1 (DE); Fengler, Gerd, Dr., W-4150 Krefeld 1 (DE); Grigo, Ulrich, Dr., W-4152 Kempen 3 (DE)

(56) Entgegenhaltungen:
- EP-A- 0 338 085
- EP-A- 0 359 953
- EP-A- 0 416 404
- DE-A- 2 555 366
- US-A- 4 452 968
- US-A- 4 469 833

## Beschreibung

Die Erfindung betrifft ein Zweistufen-Verfahren zur Herstellung von Polycarbonaten auf Basis von speziellen Dihydroxydiphenylcycloalkanen der Formel (I) 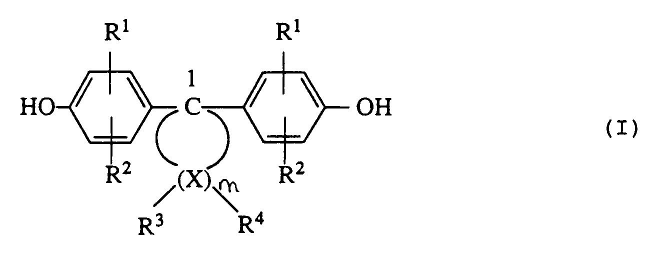
worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: 4 oder 5,
- R³ und R⁴,: für jedes x individuell wählbar, unabhängig voneinander Wasserstoff oder C₁-C₆-Alkyl
und
- X: Kohlenstoff bedeuten,
mit der Maßgabe, daß an mindestens einem Atom X R³ und R⁴ gleichzeitig Alkyl bedeuten.

Bevorzugt sind an 1 - 2 Atomen X, insbesondere nur an einem Atom X, R³ und R⁴ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in ß-Stellung zu C-1 bevorzugt. Gegenstand der Erfindung sind Dihydroxydiphenylcycloalkane mit 5 und 6 Ring-C-Atomen im cycloaliphatischen Rest (m = 4 oder 5 in Formel (I) wie beispielsweise die Diphenole der Formeln 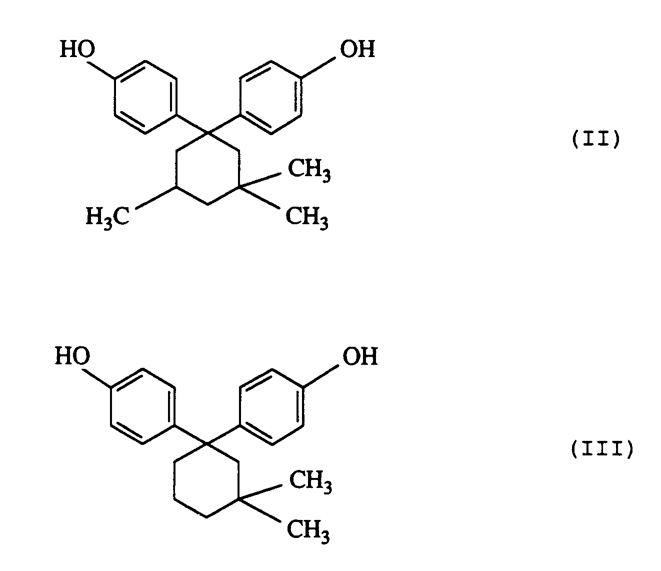
wobei das 1,1-Bis-(4-hydroxyphenyl)-3,3,5-trimethylcyclohexan (Formel II) besonders bevorzugt ist.

Die Dihydroxydiphenylcycloalkane der Formel (I) sowie die Polycarbonate auf Basis der Dihydroxydiphenylcycloalkane sind in der deutschen Offenlegungsschrift 38 32 396 beschrieben.

Gegenstand der Erfindung ist ein Zweistufen-Verfahren zur Herstellung von Polycarbonaten auf Basis der speziellen Dihydroxydiphenylcycloalkane der Formel (I), das dadurch gekennzeichnet ist, daß in einem ersten Verfahrensschritt oligomere Polycarbonate hergestellt werden und diese dann in der Schmelze oder durch Festphasennachkondensation in einem zweiten Verfahrensschritt zu hochmolekularen Polycarbonaten aufkondensiert werden.

Nach dem erfindungsgemäßen Verfahren können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (IV), zur Herstellung von hochmolekularen, thermoplastischen, aromatischen Polycarbonaten verwendet werden. Geeignete andere Diphenole der Formel HO-Z-OH (IV) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (IV) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole
sowie deren kernalkylierte und kernhalogenierte Verbindungen.

Diese und weitere geeignete andere Diphenole sind z.B. in den US-A-3 028 365, 2 999 835, 3 148 172, 3 275 601, 2 991 273, 3 271 367, 3 062 781, 2 970 131 und 2 999 846, in den deut schen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydrocxphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (IV) sind beispielsweise:
2,2-Bis-(4-hydroxyphenyl)-propan,
2,2-Bis-(3,5-dimethyl-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (IV), soll zwischen 100 Mol-% (I) zu 0 Mol-% anderem Diphenol und 2 Mol-% (I) zu 98 Mol-% anderem Diphenol, vorzugsweise zwischen 100 Mol-% (I) zu 0 Mol-% anderem Diphenol und 15 Mol-% (I) zu 85 Mol-% anderem Diphenol und insbesondere zwischen 100 Mol-% (I) zu 0 Mol-% anderem Diphenol und 20 Mol-% (I) zu 80 Mol-% anderem Diphenol und ganz besonders zwischen 100 Mol-% (I) zu 0 Mol-% anderem Diphenol und 25 Mol-% (I) zu 75 Mol-% anderem Diphenol liegen. Dabei können die verschiedenen Diphenole sowohl statistisch als auch blockweise miteinander verknüpft sein.

Als Verzweiger dienen, falls benutzt, in bekannter Weise geringe Mengen, vorzugsweise Mengen zwischen 0,05 und 2,0 Mol-% (bezogen auf eingesetzte Diphenole), an drei oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan
Hexa-( 4-(4-hydroxyphenyl-isopropyl)-phenyl)-orthoterephthal-säureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(-3-methyl-4-hydroxyphenyl)2-oxo-2,3-dihydroindol.

### Verfahrensstufe 1

In dem erfindungsgemäßen Verfahren werden zunächst in einem ersten Verfahrensschritt, ausgehend von Diphenolen (I) sowie gegebenenfalls anderen Diphenolen, oligomere Polycarbonate hergestellt. Bevorzugt weisen die oligomeren Polycarbonate Molekulargewichte M_{w} < 10500 auf.

Bevorzugte oligomere Polycarbonate sind Oligomere der Formel (V), 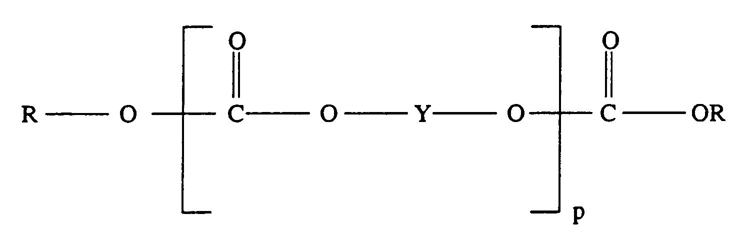
p = ganze Zahl, bevorzugt < 32;
Y = Z, 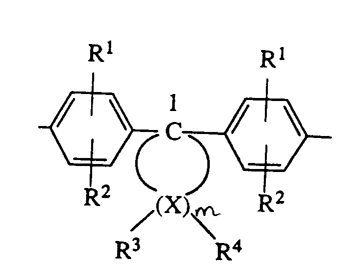
wobei R = Aryl, bevorzugt Phenyl, und/oder C₁-C₁₀-Alkyl, bevorzugt Methyl, Ethyl bedeuten. Insbesondere sind Oligomere bevorzugt, deren Gehalt an phenolischen Hydroxylgruppen < 500 ppm, bevorzugt < 350 ppm und insbesondere < 250 ppm beträgt.

Die Herstellung der Oligomeren ist unkritisch. sie erfolgt z.B. durch Reaktion von Diphenolen der Formel (I) sowie gegebenenfalls anderen Diphenolen mit Diarylcarbonat und/oder Di-(C₁-C₁₀-alkyl)-carbonaten bei Temperaturen von 20 - 350°C. Bevorzugtes Diarylcarbonat ist Diphenylcarbonat; bei Verwendung von Dialkylcarbonaten sind bevorzugte Alkylreste Methyl- und Ethyl. Das Verhältnis von Diphenolen zu Diarylcarbonaten beträgt 1 : 0,95 bis 1 : 2,2, bevorzugt 1 : 1,1 bis 1 : 1,9, insbesondere 1 : 1,2 bis 1 : 1,75. Das Verhältnis von Bisphenolen zu Dialkylcarbonaten beträgt 1 : 1,1 bis 1 : 10, bevorzugt 1 : 1,2 bis 1 : 8. Zur Beschleunigung der Reaktion können Katalysatoren eingesetzt werden. Geeignete Katalysatoren sind basische organische und/oder anorganische Verbindungen, z.B. (Erd-)alkalimetallhydroxide, -alkoholate, salze, -hydride, Pyridin. Es können auch metallorganische Verbindungen wie z.B. Triphenylphosphan, Triphenylphosphanoxid, Organozinnverbindungen wie z.B. Dibutylzinnoxid eingesetzt werden.

Anstelle der Diphenole können auch die entsprechenden Diaryl-und/oder Di (C₁-C₁₀-alkyl)-carbonsäureester eingesetzt werden.

Die oligomeren Polycarbonate (V) können auch nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (IV), eingesetzt. Zur Regulierung des Molekulargewichtes werden Kettenabbrecher zugegeben. Dann wird in Gegenwart einer inerten, vorzugsweise Polycarbonat lösenden, organischen Phase mit Phosgen nach der Methode der Phasengrenzflächenkondesation umgesetzt. Die Reaktionstmpratur liegt zwischen 0°C und 40°C.

Geeignete Kettenabbrecher sind Phenole, bevorzugt Phenol so-wie Verbindungen der Formel (VI) 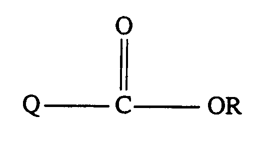
wobei
- Q =: Cl, Br, bevorzugt Cl
- R =: Aryl, bevorzugt Phenyl, C₁-C₁₀-Alkyl, bevorzugt Methyl und Ethyl sind.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (I) sowie den anderen Diphenolen (IV) können auch deren Mono- und/oder Bis-chlorkohlensäureester mitverwendet werden, wobei diese in organischen ösungsmitteln gelöst zugegeben werden.

Geeignete organische Lösungsmittel für die Lösung der Kettenabbrecher sowie gebenenfalls für die Verzweiger und die Mono- bzw. Bis-chlor-kohlensäureester sind beispielsweise Methylenchlorid, Chlorbenzol, Toluol, Aceton, Acetonitril sowie Mischungen dieser Lösungsmittel.

Die Herstellung der oligomeren Polycarbonate (V) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Isolierung der oligomeren Polycarbonate (V) erfolgt in bekannter Weise. Wenn die Oligomeren nach dem Verfahren der Phasengrenzflächenpolykondensation hergestellt werden, so können sie z.B. isoliert werden, indem man die bei der Phasengrenzflächenpolykondensation erhaltene organische Phase abtrennt, neutral und elektrolytfrei wäscht und dann beispielsweise über einen Eindampfextruder als Granulat isoliert. Die Oligomeren (V) können aus der Lösung auch durch Fällung mit einem Nichtlösemittel wie z.B. Methanol isoliert werden.

Die Oligomeren (V) können vor dem Einbringen in die zweite Verfahrensstufe durch Waschen mit Lösungsmittel, Umfällen bzw. Umkristallisation weiter gereinigt werden.

### Verfahrensstufe 2

In dem erfindungsgemäßen Verfahren werden in einem zweiten Verfahrensschritt aus den oligomeren Polycarbonaten (V) hochmolekulare Polycarbonate hergestellt.

Hierzu werden die Oligomeren (V) bei Temperaturen von 140 - 350°C weiter aufkondensiert. Die Kondensation kann sowohl in der Schmelze als auch durch Festphasennachkondensation der Oligomeren (V) erfolgen. Im letzten Fall ist die Temperatur so zu wählen, daß sie zwischen der Temperatur T₁ = Tg - 40°C (T_{g} Glastemperatur) und dem Schmelzpunkt Tₘ der Oligomeren (V) liegt. Die Kondensation kann in üblichen Reaktionsgefäßen wie Kesseln, Rohren und dergleichen durchgeführt werden. In einer bevorzugten Ausführung wird die Festphasenkondensation in einer inerten Atmosphäre (Stickstoff, Argon) durchgeführt. Wird die Kondensation in der Schmelze durchgeführt, so kann der Druck 0,1 bis 2 bar betragen.

Die resultierenden hochmolekularen, thermoplastischen, aromatischen Polycarbonate auf Basis von Diphenolen (I) sowie gegebenenfalls anderen Diphenolen zeichnen sich durch vorteilhafte Eigenschaften aus. Gegenstand der vorliegenden Erfindung sind somit auch hochmolekulare, thermoplastische, aromatische Polycarbonate auf Basis von Diphenolen (I) hergestellt durch ein zweistufiges Verfahren, dadurch gekennzeichnet, daß in einer ersten Verfahrensstufe Oligomere hergestellt werden, die in einer zweiten Verfahrensstufe zu Polymeren aufkondensiert werden.

Die erfindungsgemäßen Polycarbonate können zu Formkörpern verarbeitet werden, indem man sie beispielsweise auf einer Spritzgußmaschine, gegebenenfalls nach Zusatz von Additiven, zu verschiedenen Artikel in bekannter Weise verarbeitet.

Sie zeichnen sich durch gute mechanische Eigenschaften wie hohe Wärmeformbeständigkeit aus. Dies bedeutet, daß zur Isolierung der Produkte z.B. über einen Eindampfextruder hohe Temperaturen erforderlich sind. Ein besonderer Vorteil des erfindungsgemäßen Verfahrens besteht darin, daß die Herstellung und Isolierung der Produkte bei niedrigeren Temperaturen erfolgen kann. Ferner zeigen die nach dem erfindungsgemäßen Verfahren hergestellten Produkte eine gute Eigenfarbe und sind phenol- und lösungsmittelfrei. Insbesondere zeigen die nach dem erfindungsgemäßen Verfahren hergestellten Produkte eine bessere Beständigkeit gegen äußere Einflüsse wie Thermolagerung bei erhöhten Temperaturen, UV-Bestrahlung und Bewitterung.

In den nachfolgenden Beispielen wird die relative Viskosität gemessen an 0,5 Gew.-%igen Lösung des Polycarbonats in CH₂Cl₂.
Die Molmassen werden durch Gelpermeationschromatographie (GPC) ermittelt.

### Beispiel 1 (Herstellung eines Oligomeren durch Phasengrenzflächenreaktion)

31,0 g (0,1 Mol) des Diphenols (II), 24,0 g (0,6 Mol) NaOH und 268 ml Wasser werden in einer Inertgas-Atmosphäre unter Rühren gelöst. Dann fügt man 260 ml Methylenchlorid zu. In die gut gerührte Lösung wurden bei pH 13 bis 14 und 21 bis 25°C 19,8 g (0,2 Mol) Phosgen eingeleitet. Gleichzeitig werden 5,425 g (0,05 Mol) Chlorameisensäureethylester zudosiert. Danach werden 0,4 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit.

Man erhielt 30,1 g eines oligomeren Polycarbonates mit einer relativen Lösungsviskosität von 1,046.
Das Molekulargewicht wurde zu M_{w} = 3600 bestimmt.

### Beispiel 2:

62,1 g (0,2 Mol) des Diphenols (II) und 48,0 g (1,2 Mol) NaOH werden in einer Inertgasatmosphäre in 606 ml Wasser gelöst. Dann gibt man 606 g Tetrachlorkohlenstoff zu. In die gut gerührte Lösung wird anschließend bei pH 13 bis 14 und 21 bis 25°C 39,6 g (0,4 Mol) Phosgen eingeleitet. Danach werden 0,3 ml N-Ethylpiperidin zugegeben und noch 45 Minuten gerührt. Die bisphenolatfreie wässrige Phase wird abgetrennt und die organische Phase nach Ansäuern mit Phosphorsäure mit Wasser neutral gewaschen und vom Lösungsmittel befreit. Das kristalline oligomere Polycarbonat hatte eine rel. Lösungsviskosität von 1,09 und eine Schmelzenthalpie von 16,6 J/g (DSC-Messung).

### Beispiel 3 (Herstellung eines Oligomeren durch Reaktion von Bisphenol mit Diarylcarbonat)

31,0 g (0,1 Mol) des Diphenols (II) und 30,6 g (0,143 Mol) Diphenylcarbonat werden in einer Inertgas-Atmosphäre unter Rühren auf 200°C aufgeheizt. Nach 15 Minuten heizt man auf 225°C auf und nach weiteren 15 Minuten auf 250°C. Man beläßt die Schmelze 30 Minuten bei dieser Temperatur. Anschließend werden bei reduziertem Druck (< 10 mbar) die flüchtigen Bestandteile entfernt. Das oligomere Polycarbonat (34 g) zeigte eine relative Lösungsviskosität von 1,070. Das Molekulargewicht wurde zu M_{w} = 5000 bestimmt.

### Beispiel 4 (Aufkondensation des Oligomeren aus Beispiel 1)

5 g des Oligomeren gemäß Beispiel 1 wurden in einer Inertgasatmosphäre auf 160°C aufgeheizt und 2 h bei dieser Temperatur belassen. Das resultierende Polycarbonat zeigte eine rel. Lösungsviskosität von 1,055.

### Beispiel 5 (Aufkondensation des Oligomeren aus Beispiel 2)

15 g des Oligomeren gemäß Beispiel 2 wurden in einem Rotationsverdampfer unter N₂-Atmosphäre zunächst 1 h auf 180°C, und dann 1 h auf 200°C aufgeheizt. Anschließend wurde weitere 5 h auf 220°C erhitzt. Das resultierende Polycarbonat zeigte eine rel. Lösungsviskosität von 1,146.

## Patentansprüche

1. Zweistufenverfahren zur Herstellung von Polycarbonaten auf Basis von Dihydroxydiphenylcycloalkanen der Formel 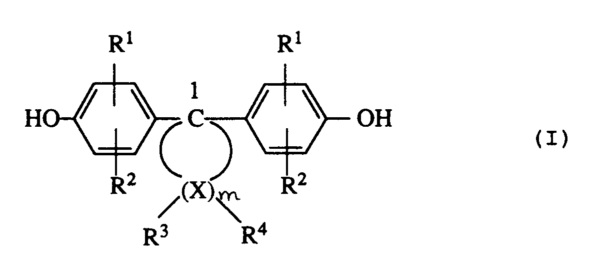 worin
R¹ und R² unabhängig voneinander Wasserstoff, Halogen, C₁-C₈-Alkyl, C₅-C₆-Cycloalkyl, C₆-C₁₀-Aryl und C₇-C₁₂-Aralkyl,
m 4 oder 5,
R³ und R⁴ für jedes X individuell wählbar, unabhängig voneinander Wasserstoff, C₁-C₆-Alkyl und
X Kohlenstoff bedeuten,
mit der Maßgabe, daß an mindestens einem Atom X R³ und R⁴ gleichzeitig Alkyl bedeuten,
dadurch gekennzeichnet, daß in einem ersten Verfahrensschritt oligomere Polycarbonate hergestellt werden und diese dann in der Schmelze oder durch Festphasennachkondensation in einem zweiten Verfahrensschritt zu hochmolekularen Polycarbonaten aufkondensiert werden.

## Claims

1. Two-stage process for preparing polycarbonates based on dihydroxydiphenylcycloalkanes of the formula 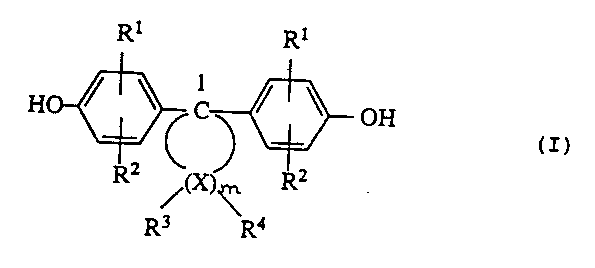 wherein
R¹ and R² independently of one another signify hydrogen, halogen, C₁-C₈ alkyl, C₅-C₆ cycloalkyl, C₆-C₁₀ aryl and C₇-C₁₂ aralkyl,
m stands for 4 or 5,
R³ and R⁴ may be individually selected for each X and independently of one another signify hydrogen, C₁-C₆ alkyl and
X signifies carbon,
with the proviso that, on at least one atom X, R³ and R⁴ simultaneously signify alkyl,
characterised in that in a first procedural step oligomeric polycarbonates are prepared and the latter then, in the melt or by means of solid-phase post-condensation, in a second procedural step are condensed to high-molecular polycarbonates.

## Revendications

1. Procédé en deux étapes pour la préparation de polycarbonates à partir de dihydroxydiphénylcycloalcanes de formule (I) 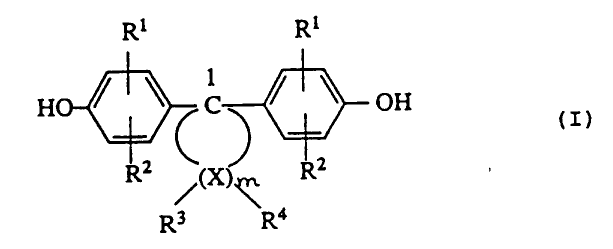 où
R¹ et R² désignent, indépendamment l'un de l'autre, de l'hydrogène, un halogène, un radical alkyle C₁-C₈, cycloalkyle C₅-C₆, aryle C₆-C₁₀, et aralkyle C₇-C₁₂,
m désigne 4 ou 5,
R³ et R⁴ pouvant être choisis individuellement pour chaque X, désignent indépendamment l'un de l'autre de l'hydrogène ou un radical alkyle C₁-C₆,
et
X désigne le carbone, dans la mesure où sur au moins un atome X, R³ et R⁴ désignent simultanément un radical alkyle,
caractérisé en ce que dans une première étape du procédé, des polycarbonates oligomères sont préparés qui, dans une deuxième étape du procédé, sont ensuite condensés en polycarbonates de poids moléculaire élevé dans la masse fondue ou par condensation ultérieure à l'état solide.
